# EUROPÄISCHE PATENTSCHRIFT

(11) **EP 3 872 041 B1**
(45) Veröffentlichungstag und Bekanntmachung des Hinweises auf die Patenterteilung: **03.07.2024**
(21) Anmeldenummer: 21159650.7
(22) Anmeldetag: 26.02.2021
(51) Int. Cl.: C03B 33/02, B23K 26/0622, B23K 26/53, B23K 26/06, B23K 26/402, B23K 103/00

(54) **VERFAHREN ZUM TRENNEN EINES GLASELEMENTS UND GLASTEILELEMENT**
METHOD OF SEPARATING A GLASS ELEMENT AND PARTIAL GLASS ELEMENT
PROCÉDÉ DE SÉPARATION D'UN ÉLÉMENT EN VERRE ET ÉLÉMENT PARTIEL EN VERRE

(30) Priorität: 28.02.2020 DE 102020105358; 04.09.2020 DE 102020123197
(43) Veröffentlichungstag der Anmeldung: 01.09.2021
(73) Patentinhaber: SCHOTT AG, 55122 Mainz (DE)
(72) Erfinder: Sohr, David, 55120 Mainz (DE); Kunisch, Clemens, 55288 Armsheim (DE); Nattermann, Kurt, 55437 Ockenheim (DE)
(74) Vertreter: Fuchs Patentanwälte Partnerschaft mbB

(56) Entgegenhaltungen:
- DE-A1-102018 126 381
- US-A1- 2017 203 994
- US-A1- 2018 221 988

## Beschreibung

Die vorliegende Erfindung betrifft ein Verfahren zum zumindest bereichsweisen Trennen eines Glaselements in wenigstens zwei Glasteilelemente entlang einer Trennfläche und ein Glasteilelement, das insbesondere mit dem erfindungsgemäßen Verfahren hergestellt und/oder herstellbar ist.

### Stand der Technik

In der Glasproduktion und -verarbeitung ist es regelmäßig erforderlich, Glaselemente, wie beispielsweise Glasplatten, entlang einer genau definierten Trennfläche zu trennen. Das Einhalten eines vordefinierten Verlaufs der Trennfläche ist beispielsweise für die Interkompatibilität der nach dem Trennen erhaltenen Glasteilelemente mit weiteren Komponenten von großer Bedeutung.

Neben einer insoweit sauberen Trennfläche schreiben Spezifikationen häufig auch das Erfordernis eines geringen Rauheitswerts sowie einer hohen Festigkeit von sowohl der Trennfläche als auch ihrer Kanten fest. Dies hat seinen Grund darin, dass Glasteilelemente, deren Trennfläche und Kanten eine geringe Rauheit einerseits und eine hohe Festigkeit andererseits aufweisen, insgesamt unempfindlicher gegen äußere Einwirkungen sind. Dadurch kann bis zu einem gewissen Grade ganz oder zumindest teilweise verhindert werden, dass äußere Beschädigungen der Trennfläche und ihrer Kanten überhaupt entstehen und dass etwaig vorhandene Defekte sich in das Innere des Glases fortsetzen bzw. Initialdefekte durch Einwirken äußerer Spannungen (mechanisch, thermisch,...) zur Rissfortführung und damit zum Versagen des Glasteils führen.

Gängige und dem Fachmann aus dem Stand der Technik bekannte Verfahren zum Durchführen eines Trennvorgangs sind dabei etwa das thermische Laserstrahl-Separieren (TLS), beispielsweise mittels eines CO₂-Lasers, das mechanische Ritzen, das Laser-Ritzen oder auch das laserbasierte thermische Trennen (laser based thermal shock cutting). Letzteres zielt auf das Fortsetzen eines Initialrisses im Glaselement mittels thermomechanischer Spannungen, typischerweise erzeugt durch einen CO₂-Laser, ab. All diesen Verfahren ist jedoch gemein, dass mit ihnen der Rissverlauf innerhalb des Glases nicht oder nur ungenügend gesteuert werden kann. Gerade wenn, wie beim mechanischen Ritzen, nur an der Oberfläche eine Ritzlinie definiert wird, kann die eigentliche sich im Tiefenbereich erstreckende Trennfläche nur ungenau vorhergesagt werden. Gleiches wurde auch für die genannten Laser-Verfahren beobachtet, obwohl deren Wirkung grundsätzlich nicht nur auf das Äußere des Glasmaterials begrenzt ist.

Bei dem dem Fachmann ebenfalls bekannten Verfahren der Laserfilamentation werden einzelne Bereiche des zu trennenden Glaselements entlang der gewünschten Trennfläche mit einem Laser entfernt. Beispielswiese wird an den gewünschten Stellen ein Durchgangsloch erzeugt und das Material in die Seitenwand der Zylinderfläche gedrückt, um so innerhalb des Glaselements mehrere Hohlräume, sogenannte Perforationslöcher, zu erzeugen. Anschließend wird das vorbearbeitete Glaselement durch Brechen, sei es etwa mechanisch oder durch Cleaven, entlang der durch die Perforationslöcher ausgebildeten Perforationslinie endgültig getrennt. Aufgrund der Perforationslöcher ist jedoch auch der Rauheitswert der späteren Trennfläche erhöht. Vor allem aber wurde beobachtet, dass beim Brechen die Risslinie von der Perforationslinie abweichen und abseits ebendieser verlaufen kann, was mithin zu einer Trennfläche führen kann, die nicht dem eigentlich gewünschten Verlauf entspricht. Gerade durch Laser eingebrachte Perforationen wurden als Ausgangspunkte von Mikro-Rissen identifiziert, die sich von einzelnen Perforationslöchern in das Glaselement fortsetzen und so den Verlauf der Trennfläche beeinflussen können.

Bekannt sind auch Trennverfahren, bei denen im Anschluss an die Laserfilamentation anstelle des Brechens ein Ätzvorgang durchgeführt wird. Zu den durch den Laserprozess bedingten Aspekten kommt hier noch hinzu, dass der notwendige Ätzvorgang aufwändig in der Vorbereitung und Durchführung und somit insgesamt relativ zeit- und kostspielig ist.

Auch Ablationsverfahren, bei denen das Glasmaterial mittels eines Ablationsspots iterativ abgetragen wird, sind dem Fachmann bekannt. Solche Verfahren sind häufig jedoch unwirtschaftlich, da ihre Ausführung viel Zeit benötigt. Erschwerend kommt hinzu, dass ein solcher Prozess häufig eine große Schädigungszone im Glaselement verursacht.

Darüber hinaus weisen die Trennflächen und ihre Kanten bei mittels der bekannten Verfahren getrennter Glaselemente eine vergleichsweise hohe Rauheit und eine vergleichsweise geringe Kantenfestigkeit auf, was zu einer Destabilisierung der Trennfläche und ihrer Kanten und infolge dessen mit der eingangs beschriebenen gesteigerten Anfälligkeit für Beschädigungen einhergeht.

DE 10 2018 126381 A1 betrifft allgemein die Materialbearbeitung von Werkstücken durch Auftrennen des Werkstücks entlang vorgesehener Linien.

Die US 2018/221988 A1 betrifft Vorrichtungen und Verfahren zur Laserbearbeitung von transparenten Werkstücken, insbesondere die Bildung von Konturlinien in transparenten Werkstücken zur Trennung von transparenten Werkstücken.

Die US 2017/203994 A1 betrifft die Glasbearbeitung und insbesondere Systeme und Verfahren zur Bearbeitung von Glassubstraten mit doppelten Airy-Strahlen.

Es ist daher Aufgabe der vorliegenden Erfindung, ein Verfahren anzugeben, mit dem die aus dem Stand der Technik bekannten Nachteile überwunden werden und das es ermöglicht, ein Glaselement sicher, zuverlässig und in effizienter und wirtschaftlicher Weise zu trennen, wobei insbesondere eine verbesserte Bestimmbarkeit der Trennfläche im gesamten Tiefenbereich ermöglicht wird und die sich ergebenden Trennflächen einschließlich ihrer Kanten einen geringen Rauheitswert und die Kanten darüber hinaus eine hohe Festigkeit aufweisen. Es ist außerdem Aufgabe der vorliegenden Erfindung, ein Glasteilelement anzugeben, das Seitenflächen bzw. Kanten mit einer hohen Festigkeit aufweist. Der Begriff Kante ist hier ein Synonym zur Trennfläche.

Die Aufgabe wird durch die Erfindung gemäß einem ersten Aspekt dadurch gelöst, dass ein Verfahren zum zumindest bereichsweisen Trennen eines Glaselements in wenigstens zwei Glasteilelemente entlang einer Trennfläche, umfassend die Schritte:
- Bereitstellen des Glaselements, das zumindest einen zumindest ein Glasmaterial aufweisenden Glaskörper umfasst;
- Steuern zumindest eines Linienfokus innerhalb des Glaskörpers derart, dass entlang der Trennfläche zumindest eine Zugspannungszone und/oder zumindest zwei Druckspannungszonen im Glasmaterial ausgebildet werden;
- Einbringen einer Initialschädigung zum Ausbilden zumindest eines Risses, jeweils in das Glasmaterial in der Zugspannungszone und/oder zwischen den zwei Druckspannungszonen; und
- Vorantreiben des Risses innerhalb des Glasmaterials in der Zugspannungszone bzw. zwischen den zwei Druckspannungszonen zum Ausbilden der Trennfläche und Trennen des Glaselements entlang dieser Trennfläche vorgeschlagen wird.

Der Erfindung liegt damit die überraschende Erkenntnis zugrunde, dass die Trennfläche innerhalb des Glasmaterials in besonders zuverlässiger Weise eingestellt und über den gesamten Tiefenbereich des Glasmaterials hinweg gesteuert werden kann, indem zunächst entlang des gewünschten Verlaufs der späteren Trennfläche eine Zugspannungszone in dem Glasmaterial ausgebildet wird. Mittels einer Initialschädigung lässt sich anschließend in dieser Zugspannungszone ein Riss ausbilden und vorantreiben, wobei der Riss durch ebendiese Zugspannungszone entsprechend dem vorgegebenen Verlauf der Trennfläche "kanalisiert" wird. Indem dabei Druckspannungszonen die Zugspannungszone zumindest bereichsweise umgeben, wird effektiv verhindert, dass der Riss die Zugspannungszone verlässt und sich in dem umgebenen Glasmaterial ausbreitet. Eine Zugspannungszone oder zwei Druckspannungszonen (relativ) können jeweils hinreichend für eine Rissführung sein.

Durch einen Linienfokus ist es dabei möglich, den gesamten Tiefenbereich des Glaskörpers zu modifizieren, so dass sich die Zugspannungszone nebst sie umgebende Druckspannungszonen tatsächlich auch im gesamten Tiefenbereich ausgebildet werden. Durch den Linienfokus wird besonders vorteilhaft die Energie des Lichts auf einen bestimmten Bereich, nämlich Tiefenbereich des Glaskörpers, gebündelt, in welchem die Modifikationen in Form von Spannungsänderungen in das Glasmaterial dann besonders vorteilhaft eingebracht werden können. Vor allem kann aber der Linienfokus überall im Glaskörper in unveränderter Qualität und mit gleichbleibenden Eigenschaften ausgebildet und entsprechend überall im Glaskörper in einheitlicher Weise Glasmaterial modifiziert werden.

Es ist als besonders bemerkenswert hervorzuheben, dass sich durch das erfindungsgemäße Verfahren im Prinzip ein beliebiger Verlauf der Trennfläche erreichen lässt, solange nur eine Ausbildung der unterschiedlichen Spannungszonen in dem Glasmaterial gemäß dem gewünschten Verlauf der Trennfläche möglich ist. Damit sind aber auch sehr komplexe Trennflächen möglich, welche mit herkömmlichen Verfahren nicht oder nur sehr schwierig realisierbar sind.

Während bei herkömmlichen Trennverfahren, denen das Ausbilden von Kavitäten zugrunde liegt, zufällige Rissverläufe dazu führen können, dass die Trennung nicht entlang der eigentlich beabsichtigten Perforationslinie erfolgt, sondern ganz oder teilweise auch auf der einen oder der anderen Seite parallel dazu, ist dies durch das Vorgeben von den erfindungsgemäßen Spannungszonen vorliegend nicht der Fall.

Auch und gerade für Bearbeitungsprozesse unter Reinraumbedingungen kommt als weiterer besonders gewichtiger Vorteil der vorliegenden Erfindung hinzu, dass das gesamte Trennverfahren ohne Materialabtragungen erfolgt und daher keine Verunreinigungen am Material selbst oder in der Umgebung verursacht. Beim mechanischen Trennen hingegen können durchaus Ausmuschelungen und/oder Splitter entstehen, insbesondere bei komplexeren Trennflächengeometrien.

Vollkommen überraschend hat sich darüber hinaus gezeigt, dass durch das erfindungsgemäße Verfahren die Festigkeit der Trennfläche und ihrer Kanten im Vergleich zu herkömmlichen Trennverfahren teilweise erheblich erhöht ist. Die Erfinder führen dies darauf zurück, dass die Druckspannungszone die spätere Trennfläche sozusagen stabilisiert und damit offenbar gleichzeitig auch verhindert, dass Beschädigungen an Trennfläche und Kanten auftreten bzw. sich ins Innere das Glasmaterials fortsetzen können.

Gleichzeitig stellten die Erfinder auch fest, dass sich mit dem erfindungsgemäßen Verfahren auch die Rauheit der Trennfläche und ihrer Kanten im Vergleich zu den Ergebnissen mit vorbekannten Techniken verringern lässt. Die Erfinder erklären sich dies damit, dass durch die präzise Vorgabe des Verlaufs der Trennfläche durch die Zugspannungszone die Trennung des Glaselements sozusagen geordneter abläuft, wodurch weniger Störungen auftreten. Durch diese sozusagen ruhige Trennung ist die Trennfläche glatter, mithin weniger rau.

Besonders vorteilhaft an dem erfindungsgemäßen Verfahren ist ferner, dass das Vorspannen der Kanten hierbei ohne Einsatz einer Flüssigkeit auskommt. Vielmehr sind die Kanten bereits inhärent vorgespannt. Es ist daher in besonders bevorzugten Ausführungsformen festzustellen, dass die Trennfläche und/oder die Kanten der Trennfläche, insbesondere nach dem Trennen des Glaselements entlang dieser Trennfläche, inhärent vorgespannt ist bzw. sind.

Das vorgeschlagene Verfahren trägt damit auf vielerlei Weisen zu einem verbesserten Trennvorgang und Ergebnis bei, da sowohl eine signifikant verbesserte Kontrolle über den Rissverlauf, nämlich durch Steuern des Spannungsfeldes, mithin über die Trennfläche, erreicht wird als auch die Werte von Rauheit und Festigkeit verbessert werden.

Gleichzeitig lässt sich das erfindungsgemäße Verfahren aber mit gängigen Mitteln realisieren und damit problemlos in bestehende Anlagen integrieren. So können insbesondere Verfahren zum Zuschneiden von Glasplatten und zum Auslösen von Glasplattenausschnitten besonders effizient und mit besonders guten Ergebnissen betrieben werden.

Mit anderen Worten könnte die Erfindung kurz und prägnant auch so zusammengefasst werden, dass ein Bereich im Glasmaterial eines Glaskörpers durch eine oder auch mehrere, kontinuierliche und/oder diskrete Überfahrten mit dem Laser über die gesamte Tiefe so modifiziert werden kann, dass in einem anschließenden Schritt das Glaselement entlang einer präzise vorgegebenen Fläche getrennt werden kann.

Die Erfindung ermöglichte es daher, dass Glaselemente, wie beispielsweise Glasplatten oder Glasscheiben, selbst mit großen Dicken ab 0,6 mm, insbesondere mit einer Dicke von zwischen 0,6 mm und 10 mm, bevorzugt von zwischen 0,6 mm und 5 mm oder von zwischen 3 mm und 5 mm, noch bevorzugter von zwischen 0,6 mm und 3 mm, noch bevorzugter von zwischen 0,6 mm und 2 mm oder am bevorzugtesten von zwischen 0,6 mm und 1,5 mm, mit einer einzigen Überfahrt in der gesamten Tiefe modifiziert werden können. Beispielsweise können die Glaselemente eine Dicke von 1 mm bis zu 50 mm, von 1 mm bis zu 40 mm, von 1 mm bis zu 30 mm, von 1 mm bis zu 20 mm oder von 1 mm bis zu 15 mm aufweisen. Alternativ oder ergänzend haben die Glaselemente eine Dicke, die größer als 1 mm, größer als 5 mm oder größer als 10 mm ist.

Anders ausgedrückt ermöglicht es das erfindungsgemäße Verfahren dem Prinzip nach, Glaselemente in einem ersten Schritt durch das Erzeugen von Modifikationen, zum Beispiel schlauch- oder zylinderförmigen Modifikationen, zu bearbeiten. In einem weiteren Schritt kann entweder durch Beaufschlagung von mechanischen und/oder thermischen Spannungen im Material das Glaselement getrennt werden oder eine geschlossene Außenkontur erzeugt werden. Innenkonturen können grundsätzlich auch beispielsweise durch nachfolgendes Ätzen erzeugt werden. Durch die im weiteren Schritt angewandten Verfahren werden allgemein gesprochen Schädigungen in der durch die Modifikationen erzeugte Zugspannungszone vorangetrieben.

In einer bevorzugten Ausführungsform kann bei dem ersten Aspekt der Erfindung alternativ oder ergänzend vorgesehen sein, dass das Steuern des zumindest einen Linienfokus innerhalb des Glaskörpers derart erfolgt, dass entlang der Trennfläche zumindest eine Zugspannungszone und zwei oder mehr Druckspannungszonen im Glasmaterial ausgebildet werden.

Der Fachmann versteht dabei, dass, wenn etwas "entlang" der Trennfläche erfolgt, beispielsweise das Ausbilden von Spannungszonen, wie etwa der Druck- und/oder Zugspannungszonen, die Trennfläche zu dem Zeitpunkt (noch) nicht zwingend vorhanden sein muss, da sie erst nach dem Trennen des Glaselements in die beiden Glasteilelemente vollständig ausgebildet ist. Stattdessen handelt es sich dann um die geplante Trennfläche.

Daher kann in bevorzugten Ausführungsformen das Verfahren ferner alternativ oder ergänzend den Schritt umfassen: Festlegen einer geplanten Trennfläche des Glaselements.

Alles was sich auf die Trennfläche im noch nicht getrennten Glaselement bezieht, bezieht sich dann auf die geplante Trennfläche. Beispielsweise umfasst dann das Steuern des Linienfokus, dass entlang der geplanten Trennfläche zumindest eine Zugspannungszone und/oder zumindest zwei Druckspannungszonen im Glasmaterial ausgebildet werden.

Der Fachmann versteht dabei, dass der Linienfokus grundsätzlich innerhalb des Glaskörpers ausgebildet sein muss. Dies schließt dabei Fälle ein, in denen der Linienfokus komplett innerhalb des Glaskörpers ausgebildet ist, also außerhalb des Glaskörpers kein Linienfokus ausgebildet ist. Dabei ist dann der Linienfokus vorzugsweise bis zur Oberfläche des Glaskörpers innerhalb des Glaskörpers ausgebildet, oder aber der Linienfokus ist bis zu einem gewissen Abstand, etwa einem Abstand von bis zu 2 µm, von bis zu 1 µm oder von bis zu 0,5 µm, zur jeweiligen Oberfläche innerhalb des Glaskörpers ausgebildet. Aber es sind freilich auch Fälle eingeschlossen, in denen der Linienfokus zwar auch im Glaskörpers ausgebildet ist, sich aber auch außerhalb davon erstreckt. In der Tat stellt dies sogar einen bevorzugten Fall dar.

Die Aufgabe wird durch die Erfindung gemäß einem zweiten Aspekt dadurch gelöst, dass ein Verfahren zum zumindest bereichsweisen Trennen eines Glaselements in wenigstens zwei Glasteilelemente entlang einer Trennfläche, umfassend die Schritte:
- Bereitstellen des Glaselements, das zumindest einen zumindest ein Glasmaterial aufweisenden Glaskörper umfasst;
- Steuern zumindest eines Linienfokus innerhalb des Glaskörpers derart, dass entlang der Trennfläche zumindest eine Zugspannungszone und zumindest zwei Druckspannungszonen im Glasmaterial ausgebildet werden;
- Einbringen einer Initialschädigung zum Ausbilden zumindest eines Risses, jeweils in das Glasmaterial in der Zugspannungszone und/oder zwischen den zwei Druckspannunsgzonen; und
- Vorantreiben des Risses innerhalb des Glasmaterials in der Zugspannungszone bzw. zwischen den zwei Druckspannungszonen zum Ausbilden der Trennfläche und Trennen des Glaselements entlang dieser Trennfläche
vorgeschlagen wird.

Dabei kann auf die Ausführungen zu dem ersten Aspekt der Erfindung verwiesen werden, welche entsprechend auch hier gelten.

Daher kann auch bei dem zweiten Aspekt der Erfindung in bevorzugten Ausführungsformen das Verfahren ferner alternativ oder ergänzend den Schritt umfassen: Festlegen einer geplanten Trennfläche des Glaselements.

Alternativ oder ergänzend kann bei dem ersten und zweiten Aspekt der Erfindung auch vorgesehen sein, dass (i) die Druckspannungszonen zumindest bereichsweise zueinander beabstandet sind; (ii) die Zugspannungszone zumindest bereichsweise jeweils von zumindest einer Druckspannungszone umgeben ist; (iii) das Steuern des Linienfokus umfasst, dass entlang der Trennfläche zumindest eine Zugspannungszone und zumindest zwei Druckspannungszonen im Glasmaterial ausgebildet werden, wobei die Zugspannungszone zumindest bereichsweise jeweils von zumindest einer der beiden Druckspannungszone umgeben ist; (iv) das Steuern des Linienfokus umfasst, dass das Glaselement relativ zu dem Linienfokus verfahren wird, wodurch vorzugsweise der Linienfokus, insbesondere nacheinander oder kontinuierlich, zumindest an den unterschiedlichen Ortsbereichen ausgebildet werden kann; (v) das Steuern des Linienfokus zu einem zerstörungsfreien Ausbilden der Spannungszonen führt, Modifikationen vom Typ "soft refractive index change" in das Glasmaterial einbringt, und/oder umfasst, dass der Linienfokus nacheinander innerhalb unterschiedlicher Ortsbereiche des Glasmaterials entlang der Trennfläche ausgebildet wird und dadurch das Glasmaterial jeweils dieser Ortsbereiche hinsichtlich dessen örtlicher Spannungswerte modifiziert wird, und wobei der Abstand der einzelnen Ortsbereiche derart gewählt ist, dass zumindest unmittelbar benachbarte Ortsbereiche zumindest teilweise überlappen, so dass ein durchgehender Korridor von eingebrachten Modifikationen im Glasmaterial entlang der Trennfläche ausgebildet wird, wobei vorzugsweise durch die Überlagerung der Modifikationen mehrerer Ortsbereiche die unterschiedlichen Spannungszonen ausgebildet werden, und/oder wobei die einzelnen Ortsbereiche in zumindest einer, vorzugsweise parallel zu zumindest einer, insbesondere zumindest eine der Schnittkanten der Trennfläche umfassenden, Oberfläche des Glaskörpers und/oder senkrecht zur optischen Achse des Lichtstrahls verlaufenden, Querschnittsebene des Glaselements entlang eines geradlinigen Pfades verlaufen; und/oder (vi) in zumindest einer Querschnittsebene, vorzugsweise in allen Querschnittsebenen, parallel zu der Oberfläche des Glaskörpers, die Ortsbereiche kreisförmig ausgebildet sind und/oder jeweils zwei unmittelbar benachbarte Ortsbereiche (a) einen Mitte-Mitte-Abstand oder einen Schwerpunkt-Schwerpunkt-Abstand aufweisen, der kleiner ist als der größte Durchmesser ihrer Ausdehnung, insbesondere die Ausdehnung in der Querschnittsebene, und/oder (b) einen Mitte-Mitte-Abstand oder einen Schwerpunkt-Schwerpunkt-Abstand von 1000 nm oder weniger, bevorzugter von 100 nm oder weniger, noch bevorzugter von 10 nm oder weniger und am bevorzugtesten von 1 nm oder weniger aufweisen.

Indem das Steuern des Linienfokus ohne Zerstörung im Sinne einer Kavität, einer separaten Phase oder von Rissen des Glaskörpers bzw. des Glasmaterials abläuft, ist es besonders vorteilhaft möglich, das Bestimmen des Verlaufs der Trennfläche, nämlich durch Ausbilden der Zugspannungszone einerseits und das Durchführen des physischen Trennens, nämlich durch Einbringen und Vorantreibens eines Risses in die bzw. der Zugspannungszone, andererseits, voneinander zu separieren und dadurch im Vergleich zu herkömmlichen Verfahren mehr Kontrolle über den Trennvorgang erlangen zu können.

So geht bei vorbekannten Trennverfahren die Vorgabe des Verlaufs bereits mit einer Materialschwächung einher, wovon wiederum eine wenig kontrollierbare Beschädigung des übrigen Glasmaterials ausgehen kann. Bei der Erfindung ist es hingegen möglich, das Modifizieren des Glasmaterials so durchzuführen, dass keine Risse, Hohlräume oder dergleichen ins Material eingebracht werden.

Bevorzugt ist der Abstand so gewählt, dass eine Überlappung der Druckspannungszone im zentralen Bereich entlang der geplanten Trennfläche vermieden wird, wobei der Abstand etwa der doppelten Dicke der Druckspannungszone entspricht. Besonders bevorzugt sind also die mittleren Abstände von 20-200 nm, kleinere Abstände sind jedoch auch möglich. Modifikationen des Typs "soft refractve index change" sind zerstörungsfreie, d.h. von radialen Rissen, Kavitäten oder starken Phasenkontrasten freie, Modifikationen, die signifikante Änderungen des Spannungszustands beinhalten. In der Fachliteratur wird diese Art von Modifikation oftmals wegen der damit einhergehenden Änderung der Brechzahl "soft refractve index change" genannt.

Vorteil derartiger Modifikationen, vgl. mit UKP geschriebene Wellenleiter, UKP-Laserschweißen, ist weniger Störung bei der Ausprägung des Linienfokus durch vorhergehende Modifikationen.

Indem verschiedene Ortsbereiche des Glasmaterials zum Ausbilden des Linienfokus ausgewählt werden, und indem innerhalb dieser Ortsbereiche der Linienfokus die Spannungswerte des Glasmaterials entsprechend modifiziert, können der Verlauf und die Ausbildung der Spannungszonen gezielt festgelegt und gesteuert werden. Insbesondere lassen sich damit diskrete Orte innerhalb des Glaskörpers bzw. des Glasmaterials auswählen, an denen Spannungszonen eingebracht werden sollen.

Indem dann benachbarte Ortsbereiche überlappen, wird ein durchgehender Volumenbereich in dem Glaskörper mit entsprechenden Spannungswerten erreicht, also sozusagen ein Korridor. Insbesondere wenn die Ausbildung der unterschiedlichen Spannungszonen, also der einen Zugspannungszone und/oder der beiden Druckspannungszonen, in Folge der Superposition der Spannungsmodifikationen benachbarter Ortsbereiche erfolgt, braucht es trotz mehrerer Spannungszonen doch nur einen einzigen Fokus und nur einen Durchlauf, um diese auszubilden. Freilich wäre aber auch denkbar, dass je Ortsbereich auch mehrere Foki des Linienfokus bestehen. Es ist bevorzugt möglich, dass mehrere Foki zur Ausprägung der Modifikation verwendet werden, wobei insbesondere nicht alle dieser Foki die gleiche Geometrie aufweisen müssen.

Zum Ausbilden einer geradlinigen Trennfläche können die einzelnen Ortsbereiche so gewählt werden, dass sie entlang eines geradlinigen Pfades verlaufen.

Der Fachmann versteht dabei, dass ein Ortsbereich des Glasmaterials grundsätzlich größer sein kann als der Bereich, den der Linienfokus im Glasmaterial einnimmt. Ein Ortsbereich bestimmt sich dadurch, dass in diesem das Glasmaterial durch den Linienfokus hinsichtlich seiner Spannungswerte modifiziert, also verändert, wird.

In bevorzugten Ausführungsformen kann alternativ oder ergänzend vorgesehen sein, dass das Steuern des Linienfokus umfasst, dass der Linienfokus kontinuierlich oder diskret durch den Glaskörper geführt wird.

Der Fachmann weiß, dass eine kontinuierliche Ausbildung des Linienfokus im Falle eines gepulsten Lasers nicht möglich ist, dass aber der mit einem solchen Laser ausgebildete Linienfokus im Sinne der Erfindung sehr wohl "kontinuierlich durch den Glaskörper" geführt werden kann. Dies bedeutet dann nämlich nichts anderes, als dass sich der Ort, an dem der Linienfokus ausgebildet wird kontinuierlich ändert.

Dabei haben die Erfinder erkannt, dass der Linienfokus auf mehrere Arten verfahren und/oder abgelenkt werden kann, um die unterschiedlichen Spannungszonen entlang der Trennfläche auszubilden: So kann beispielsweise der Linienfokus (quasi-) kontinuierlich entlang der Trennfläche bewegt werden. Dadurch kann ein besonders gleichmäßiges Modifizieren erfolgen. Die Geschwindigkeit des Bewegens sollte dabei vorzugsweise so gewählt werden, dass sich die jeweiligen Spannungszonen ausbilden können.

Oder der Linienfokus erreicht einzelne diskrete Positionen, das heißt Ortsbereiche, nacheinander. Die Positionen sollten dabei wie angemerkt so gewählt werden, dass zumindest benachbarte Ortsbereiche, in denen die jeweiligen Modifikationen auftreten, zumindest teilweise überlappen. Wenn beispielsweise der Linienfokus einen runden Querschnitt hat und senkrecht auf die Oberfläche einstrahlt, und damit die Ortsbereiche zylinderförmig im Glasmaterial ausgebildet werden und entsprechend der Linienfokus eine Kreisfläche auf der Oberfläche des Glaskörpers darstellt, könnte in bevorzugten Ausführungsformen der Abstand benachbarter Positionen entlang der Trennfläche kleiner als der einfache Durchmesser, vorzugsweise kleiner als der halbe Durchmesser, des Kreises gewählt werden. Dadurch ist sichergestellt, dass im Glasmaterial durchgängige Druck- und Zugspannungszonen ausgebildet werden. Beispielsweise könnte der einfache Durchmesser 2 µm und der halbe Durchmesser 1 µm betragen. Bei anderen Linienfoki, die zu anderen Ortsbereichen und Schnittflächen mit der (allgemein gestalteten) Oberfläche des Glaskörpers führen, gelten die Überlegungen entsprechend und anstelle des Mitte-Mitte-Abstandes kann auch der Schwerpunkt-Schwerpunkt-Abstand treten.

Alternativ oder ergänzend kann bei dem ersten und zweiten Aspekt der Erfindung auch vorgesehen sein, dass i. der Linienfokus durch mindestens einen Lichtstrahl, insbesondere in Form eines Laserstrahls, ausgebildet wird, wobei vorzugsweise der zumindest eine Laserstrahl zumindest im Bereich des Linienfokus ein Airy-Strahlprofil und/oder ein Bessel-Strahlprofil aufweist;
ii. der Lichtstrahl zumindest im Bereich des Linienfokus in Form eines Lichtstrahls mit asymmetrischer Strahlzuführung ausgebildet ist, insbesondere die Energie asymmetrisch zugeführt wird, und vorzugsweise (a) derart ausgestaltet ist, dass der Schwerpunkt der Energieverteilung in wenigstens einer Ebene senkrecht zur Ebene, in der die Strahlausbreitung erfolgt, im Bereich des bisher nicht modifizierten Glasmaterials liegt, (b) die Teilstrahlen des Lichtstrahls nur aus einer halben Raumhälfte, oder einem Teil davon, einfallen, (c) die Teilstrahlen des Lichtstrahls nur aus Richtungen einfallen, die so gewählt sind, dass sie nicht durch Bereiche des Glaskörpers propagieren, in denen bereits Glasmaterial modifiziert wurde, (d) der Lichtstrahl zumindest eine Spiegelebene parallel zu der Ebene, in der die Strahlausbreitung erfolgt, aufweist, (e) der Begriff "asymmetrisch" im Sinne von "nicht-rotationssymmetrisch" zu verstehen ist, insbesondere also andere Symmetrien nicht ausgeschlossen sind und/oder (d) die Teilstrahlen des Lichtstrahls in jeder zu zumindest einer Oberfläche des Glaselements parallelen Ebene und/oder in jeder zur optischen Achse des Lichtstrahls senkrechten Ebene nur aus einem oder nur aus zwei Quadranten einfallen;
iii. der oder die Laserstrahlen mittels zumindest eines Lasers erzeugt werden und der Laser in einem Pulsbetrieb, insbesondere in einem Ultrakurzpulslaser-Betrieb, betrieben wird;
iv. der Laser eine Wellenlänge von zwischen 300 nm und 1200 nm, vorzugsweise 1064 nm, eine Pulsdauer von zwischen 0,1 ps und 100 ps, vorzugsweise zwischen 0,1 ps und 10 ps, vorzugsweise 1 ps oder 8 ps, und/oder, zumindest bereichsweise im Linienfokus, eine Pulsenergie von zwischen 10 nJ/mm und 200 µJ/mm, bevorzugt zwischen 10 nJ/mm und 100 µJ/mm oder 110 µJ/mm, für Punkfoki: 1 nJ bis 100 nJ und für Burst 1 nJ - 20 nJ, aufweist;
   und/oder
v. der Linienfokus ganz oder teilweise mittels zumindest einer Phasenmaske, insbesondere aufweisend eine kubische Phase, mittels zumindest eines Mikroskop-Objektivs, mittels zumindest eines 4f-Aufbaus, mittels zumindest einer asymmetrischer Strahlzuführung und/oder mittels einer Vielzahl von Strahlformelementen, wie insbesondere zylindrischen Linsen, ausgebildet wird, insbesondere die Strahlformelemente derart gewählt und/oder angeordnet sind, dass sich der Linienfokus durch Koma, Astigmatismus und/oder sphärische Aberration ausbildet.

Die Erfinder haben erkannt, dass das Einbringen der Spannungszonen in den Glaskörper bzw. in das Glasmaterial in besonders einfacher und effizienter Weise mit gängigen und am Markt verfügbaren Mitteln erfolgen kann, wenn dazu ein Laser eingesetzt wird, mithin die Lichtstrahlen Laserstrahlen darstellen bzw. umfassen. Der Einsatz eines Laserstrahls bzw. mehrerer Laserstrahlen erlaubt eine hochpräzise Ausbildung der Spannungszonen im Glasmaterial. Zudem sind die optischen Komponenten für Laser-Systeme gut verfügbar. Darüber hinaus ermöglichen es Laser, selbst feinste Strukturen, hier also Spannungszonen, auszubilden.

Vorzugsweise ist der Laser ein Ultrakurzpulslaser. Insbesondere emittiert der Ultrakurzpulslaser Pulse mit einer Pulslänge von weniger als 20 ps, vorzugsweise von 10 ps oder weniger oder von 1 ps oder weniger.

Vorzugsweise wird ein Ultrakurzpulslaserstrahl mit Linienfokus eingesetzt. Wenn die Pulsenergie geeignet gewählt ist, entstehen keine Kavitäten im Glasmaterial, aber das Glasmaterial wird hinsichtlich seiner Spannungswerte modifiziert. Dadurch kann eine Zugspannungszone angelegt werden, die beispielsweise auf beiden Seiten von je einer Druckspannungszone umgeben ist.

Der Fachmann weiß, dass eine kontinuierliche Ausbildung des Linienfokus mit einem gepulsten Laser nicht möglich ist, dass aber der mit einem solchen Laser ausgebildete Linienfokus im Sinne der Erfindung "kontinuierlich entlang der Trennfläche bewegt werden kann". Dies bedeutet dann nämlich nichts anderes, als dass sich der Ort, an dem der Linienfokus ausgebildet wird kontinuierlich ändert.

Wenn der Laserstrahl ein Airy- oder Bessel-Strahlprofil aufweist, kann in besonders effizienter und einfacher Weise ein Linienfokus erhalten werden. Wenn der Laser im Pulsbetrieb betrieben wird, kann besonders effizient die Modifikation in das Glasmaterial eingebracht werden. Ein anderer Linienfokus, z.B. durch sphärisch aberrierte Linse, oder (für mehrere Überfahrten) auch Punktfoki, z.B. Standard Gauss-Fokus, sind denkbar.

Ein Airy-Strahl oder ein Bessel-Strahl lassen sich außerdem besonders einfach und effizient erzeugen. So kann etwa ein Gauß-Strahl als Ausgangsbasis dienen, der mittels geeigneter Optiken, wie etwa ein Axikon, dann zu einem Bessel-Strahl geformt wird. Beispielsweise kann sich ein Airy-Strahl als Abbildung eines Strahls mit kubischer Phase, die entweder direkt durch eine Phasenmaske (DOE oder SLM) oder einen Aufbau mit Zylinderlinsen erzeugt wird, ergeben.

Pulsenergie und/oder Pulsdauer sind vorzugsweise so gewählt, dass das Glasmaterial nicht zerstört wird.

Eine asymmetrische Strahlzuführung führt zu einem stabileren Fokus des Laserstrahls, insbesondere wenn dadurch erreicht wird, dass Teilstrahlen auf dem Weg zum Fokus weniger stark abweichende optische Weglängen haben. Dabei ist die Parallelität zwischen Brechzahl-Variation und Linienfokus entscheidend und vielmehr noch die Symmetrie. Denn wenn die Änderung der optischen Weglänge durch die Brechzahl-Variation für alle Teilstrahlen gleich ist, ergibt sich die geringste Störung für den Fokus. Damit führt die asymmetrische Strahlzuführung zu einer gezielten Modifikation des Glasmaterials. Dennoch sind auch symmetrische Strahlformen denkbar, beispielsweise die des Besselstrahls oder die von einer sphärisch aberrierten Optik/Linse hervorgerufene Strahlform.

Der Fachmann versteht dabei, dass bei einem asymmetrischen Strahl eine asymmetrische Anordnung der Teilstrahlen vorliegt, aber selbstverständlich grundsätzlich nicht mehrere Strahlengänge für die asymmetrische Strahlzuführung genutzt werden.

Ein Lichtstrahl mit asymmetrischer Strahlzuführung erfüllt die Eigenschaft reduzierter bzw. eliminierter lateraler Teilstrahlen in besonders einfacher und effektiver Weise. Dazu wird (beispielsweise mittels einer strahlformenden Optik) die Energie nicht mehr rotationssymmetrisch entlang einer Kegelfläche auf die Fokallinie zugeführt, sondern nun asymmetrisch. Mit anderen Worten wird also der Lichtstrahl dergestalt ausgeformt, dass er im Gegensatz zu herkömmlicherweise verwendeten Lichtstrahlen keine Anteile des Lichtstrahls aufweist, welche mit den bereits eingebrachten Modifikationen zusammentreffen können. Dadurch kann sichergestellt werden, dass der Lichtstrahl in hohem Maße unbeeinflusst von bereits bestehenden Modifikationen bleibt und somit Spannungszonen von besonders hoher Qualität ausgebildet werden können, da der Linienfokus in gleichbleibend hoher Qualität über den gesamten Dickenbereich des Glaselements ausgebildet werden kann.

Im Zusammenhang mit der Strahlzuführung bzw. Energiezuführung wird vorliegend der Begriff "asymmetrisch" im Sinne von "nicht-rotationssymmetrisch" verstanden. Das bedeutet, dass andere Symmetrien damit nicht ausgeschlossen werden. Zum Beispiel hat der Airy-Strahl eine Spiegelebene parallel zu der Ebene, in welcher sein gekrümmter Verlauf liegt.

Wird die Energie asymmetrisch zugeführt, und zwar vorzugsweise derart ausgestaltet, dass der Schwerpunkt der Energieverteilung in der Ebene senkrecht zur Strahlausbreitungsrichtung im Bereich des bisher nicht modifizierten Glasmaterials liegt, kann besonders effektiv verhindert werden, dass der Linienfokus durch bereits vorhandene Modifikationen beeinflusst wird.

Die Teilstrahlen können in einer halben Raumhälfte oder einem Teil davon verlaufen, so ist sichergestellt, dass die Teilstrahlen stets im noch nicht modifizierten Glasbereich verlaufen.

Ein Airy-Strahl eignet sich besonders gut für eine asymmetrische/seitliche Strahlzuführung. Ein Bessel-Strahl eignet sich besonders gut für eine symmetrische/radiale Strahlzuführung.

In bevorzugten Ausführungsformen ist es der Fall, dass eine gebogene Fokuslinie vorliegt. Der Fachmann spricht in solchen Fällen auch von einem "beschleunigten Lichtstrahl".

Es zeigt sich also, dass für die vorliegende Erfindung eine Vielzahl an unterschiedlichen Strahlformen (z.B. Gauss, Bessel, sphärisch aberrierter Strahl, etc.) besonders gut verwendet werden können, je nach Situation.

Das Verhältnis von Strahldurchmesser zu Skalierung der Phasenmaske/Aberration sollte so gewählt werden, dass die Nebenmaxima den Prozess nicht stören.

Alternativ oder ergänzend kann bei dem ersten und zweiten Aspekt der Erfindung auch vorgesehen sein, dass (i) in der Zug- und/oder Druckspannungszone die Isobaren der ersten Hauptspannung parallel zur Trennfläche verlaufen; (ii) die beiden Druckspannungszonen voneinander getrennt sind, insbesondere parallel beabstandet zueinander verlaufen; und/oder (iii) in zumindest einer Querschnittsebene, vorzugsweise in allen Querschnittsebenen, parallel zu der Oberfläche des Glaskörpers zumindest bereichsweise, vorzugsweise überall, i. die Zugspannungszone sandwichartig, insbesondere unmittelbar, zwischen den beiden Druckspannungszonen angeordnet ist; und/oder ii. die Zugspannungszone eine erste Dicke aufweist und die Druckspannungszone eine zweite Dicke aufweist, wobei vorzugsweise die erste bzw. zweite Dicke jeweils in der Querschnittsebene in einer Richtung senkrecht zur Haupterstreckungsrichtung der Trennfläche gemessen wird und/oder jeweils die maximale Dicke der Druck- bzw. Zugspannungszone in der jeweiligen Querschnittsebene ist, und wobei insbesondere die erste Dicke kleiner als 50 µm, vorzugsweise kleiner als 10 µm, noch bevorzugter kleiner als 5 µm, noch bevorzugter kleiner als 2 µm, noch bevorzugter kleiner als 1 µm und am bevorzugtesten zwischen 0,1 µm und 1 µm ist, und/oder die zweite Dicke kleiner als 100 µm ist und/oder größer als 1 nm ist, insbesondere zwischen 10 nm und 1 µm ist.

Indem in den Druck- und/oder Zugspannungszonen die Isobaren der ersten Hauptspannung parallel zu der geplanten Trennfläche verlaufen, kann eine besonders sichere "Kanalisierung" des Risses und damit ein besonders zuverlässiges Ausbilden der Trennfläche gemäß dem gewünschten Verlauf erreicht werden.

Indem die Druckspannungszonen die Zugspannungszone derart sandwichartig umschließen, ist besonders gut sichergestellt, dass der Riss innerhalb der Zugspannungszone verläuft und nicht aus dieser herausführt. Dadurch kann die Ausbreitung des Risses und damit die Ausbildung der Trennfläche gemäß dem gewünschten Verlauf besonders vorteilhaft unterstützt werden.

Bei Wahl geeigneter Dicken für die Druckspannungszonen oder die Zugspannungszone können mit minimaler Modifikation des Glasmaterials sehr gute Ergebnisse hinsichtlich der Trennfläche erreicht werden.

Insbesondere wenn die erste und zweite Dicke ein bevorzugtes Verhältnis zueinander erfüllen, ist eine besonders gute Abstimmung der Ausdehnung der beiden Zonentypen gegeben und damit sind mit möglichst wenig Modifikation eine gute Kontrolle über die Trennfläche sowie gute Eigenschaften von sowohl Trennfläche als auch Kante gegeben. Bevorzugte Werte für die erste Dicke sind < 50 µm, 10 µm, 5 µm, 2 µm, 1 µm, insbesondere 0,1 µm - 1 µm. Bevorzugte Werte für die zweite Dicke sind < 100 µm (oder größer), > 1 nm, insbesondere 10 nm - 1 µm.

Die Breite der Zugspannungszone bzw. der Abstand zwischen den Druckspannungszonen sollte möglichst gering sein, um den Ort der finalen Trennfläche möglichst genau zu definieren. Die Dicke der Druckspannungszonen hingegen sollte möglichst groß sein, um ein möglichst stabiles Produkt zu erhalten (große Vorspanntiefe). Es besteht zudem eine gegenseitige Abhängigkeit zwischen der Dicke der Druckspannungszone und der Amplitude, die (wie beim Vorspannen von Glas) optimiert werden muss.

Alternativ oder ergänzend kann bei dem ersten und zweiten Aspekt der Erfindung auch vorgesehen sein, dass i. die Initialschädigung mittels eines gepulsten Lasers, vorzugsweise aufweisend eine Pulsenergie von zwischen 80 µJ/mm und 300 µJ/mm und/oder eine Pulsdauer von zwischen 0,1 ps und 20 ps, in das Glasmaterial eingebracht wird; ii. der Riss durch mechanisches Brechen, durch Cleaven und/oder durch mindestens einen Ultrakurzpulslaser (UKP)-Prozess vorangetrieben wird; und/oder iii. die Trennfläche innerhalb der Zugspannungszone und/oder zwischen zwei Druckspannungszonen verläuft und/oder sich ausbildet.

Wenn die Initialschädigung mittels eines gepulsten Lasers in das Glasmaterial eingebracht wird, kann räumlich sehr gezielt und mit auf den Anwendungsfall hin optimierter Pulsenergie der Riss initiiert werden.

Für die Initialschädigung beträgt die Pulsenergie vorzugsweise 80 µJ/mm - 300 µJ/mm bei 0,1 ps - 20 ps. Wenn der Riss durch mechanisches Brechen, durch Cleaven und/oder durch mindestens einen Ultrakurzpulslaser (UKP)-Prozess vorangetrieben wird, kann dies mittels konventioneller und vertrauter Mitteln erfolgen, welche gut verfügbar und für diesen Zweck gut kontrollierbar sind.

In bevorzugten Ausführungsformen kann bei dem ersten und zweiten Aspekt der Erfindung alternativ oder ergänzend auch vorgesehen sein, dass die Trennfläche innerhalb der Zugspannungszone und/oder zwischen den beiden durch den gesteuerten Linienfokus ausgebildeten Druckspannungszonen verläuft und/oder sich ausbildet

Alternativ oder ergänzend kann bei dem ersten und zweiten Aspekt der Erfindung auch vorgesehen sein, dass die Ortsbereiche im Glasmaterial zumindest bereichsweise schlauch- und/oder zylinderförmig und/oder gekrümmt, insbesondere in zumindest einer Querschnittsebene sichelartig, verlaufen und/oder sich vorzugsweise von der Oberfläche des Glaskörpers zur der Oberfläche gegenüberliegenden Oberfläche des Glaskörpers durch den gesamten zwischen den beiden Oberflächen eingeschlossenen Dickenbereich des Glaskörpers hindurch erstrecken.

In bevorzugten Ausführungsformen erstrecken sich die Ortsbereiche in einer Richtung senkrecht zu der Haupterstreckungsrichtung der Trennfläche.

Alternativ oder ergänzend kann bei dem ersten und zweiten Aspekt der Erfindung auch vorgesehen sein, dass das Glaselement, insbesondere der Glaskörper, zumindest bereichsweise und/oder komplett scheibenförmig ausgestaltet ist und/oder das Glasmaterial zumindest teilweise Silikatglas, wie Alumosilikatglas und/oder Borosilikatglas, umfasst.

Die Aufgabe wird durch die Erfindung gemäß einem dritten Aspekt dadurch gelöst, dass ein Glasteilelement, insbesondere hergestellt und/oder herstellbar mit einem Verfahren gemäß dem ersten und/oder zweiten Aspekt der Erfindung, umfassend zumindest einen zumindest ein Glasmaterial aufweisenden Glaskörper, der zumindest eine Seitenfläche aufweist, wobei die Spannungswerte des Glaskörpers in zumindest einer Ebene zumindest bereichsweise, vorzugsweise vollständig, einer Druckspannung, vorzugsweise von 1 MPa bis 3000 MPa, insbesondere von 50 MPa bis 700 MPa, entsprechen, wobei die Ebene vorzugsweise parallel zur Seitenfläche verläuft, vorgeschlagen wird.

Der Erfindung liegt damit die überraschende Erkenntnis zugrunde, dass für eine Seitenfläche und ihre Kanten eine hohe Festigkeit erreicht werden kann, indem sozusagen im Glasmaterial "hinter" der Seitenfläche eine Ebene vorgesehen wird, in der die Spannungswerte des Glaskörpers einer Druckspannung entsprechen.

Die Erfinder erklären sich diese positive Eigenschaft damit, dass die Druckspannung im Glaskörper die Seitenfläche von innen heraus stabilisiert und damit zu einer verbesserten Kantenfestigkeit beiträgt.

Es ist dabei bemerkenswert, dass die Bereiche mit Druckspannung nicht unmittelbar auf der Seitenfläche oder direkt dahinter sein müssen, sondern auch Druckspannungen in Zonen, die sozusagen erst ein wenig nach innen versetzt auftreten, zu einer signifikanten Verbesserung der Kantenfestigkeit führen. Dennoch ist es grundsätzlich vorteilhaft, wenn das Volumen nah an der Seitenfläche auch unter Druckspannung steht.

Die Zugspannungszone ist verglichen mit der Druckspannungszone vorzugsweise recht breit. Die Seitenfläche liegt vorzugsweise komplett in der Druckspannungszone.

Alternativ oder ergänzend kann bei dem dritten Aspekt der Erfindung auch vorgesehen sein, dass die Spannungswerte in der Seitenfläche des Glaskörpers zumindest bereichsweise einer Zugspannung entsprechen, die Ebene in einem Volumenbereich liegt, in der die Spannungswerte des Glaskörpers einer Druckspannung entsprechen und/oder in der Ebene die Isobaren der ersten Hauptspannung des Glaskörpers parallel zur Seitenfläche verlaufen.

Ein besonders bevorzugter Aufbau ist gegeben, wenn in der Ebene die Isobaren der ersten Hauptspannung des Glaskörpers parallel zur Seitenfläche verlaufen. Dies ist eine erstrebenswerte (Zwischen-) Produkteigenschaft.

Alternativ oder ergänzend kann bei dem dritten Aspekt der Erfindung auch vorgesehen sein, dass entlang der Seitenfläche die Kantenfestigkeit des Glasteilelements, insbesondere des Glaskörpers, größer als 100 MPa ist und/oder konstant über die gesamte Seitenfläche ist.

Eine möglichst hohe Kantenfestigkeit führt zu einem besonders stabilen und daher gut einsetzbaren Glasteilelement.

Alternativ oder ergänzend kann bei dem dritten Aspekt der Erfindung auch vorgesehen sein, dass die Seitenfläche zumindest bereichsweise eine, vorzugsweise mittlere, Oberflächenrauheit mit einer Rautiefe RZ von 5 nm bis 10 µm, insbesondere von 0,1 µm - 5 µm, aufweist. Erstaunlicherweise unterstützt eine geringe Oberflächenrauheit die durch die Druckspannungszone bewirkte hohe Kantenfestigkeit und führt damit zu einem besonders stabilen und daher gut einsetzbaren Glasteilelement.

Alternativ oder ergänzend kann bei dem dritten Aspekt der Erfindung auch vorgesehen sein, dass die Seitenfläche plan und/oder gewölbt ist, vorzugsweise in zumindest einer Querschnittsebene senkrecht zur Seitenfläche, zumindest abschnittsweise einen parabelförmigen und/oder kreisförmigen Verlauf und/oder einen Verlauf gemäß einer Gleichung vierten Grades aufweist.

Bei einer gewölbten Seitenfläche können die auf diese einwirkenden Kräfte besonders vorteilhaft abgeleitet werden und damit die Stabilität der Seitenfläche und ihrer Kanten gesteigert werden.

### Kurzbeschreibung der Figuren

Weitere Merkmale und Vorteile der Erfindung ergeben sich aus der nachfolgenden Beschreibung, in der bevorzugte Ausführungsformen der Erfindung anhand von schematischen Zeichnungen erläutert werden.

Dabei zeigt:
- Fig. 1: ein Spannungsmuster für eine einzelne (diskrete) Modifikation in einem Glaselement;
- Fig. 2: ein Glaselement mit Zonen unterschiedlicher Spannung als Überlagerung (diskreter) Modifikationen;
- Fig. 3a: eine erste Querschnittsansicht eines Raytracing-Modells eines Airy-Strahls in einer ersten Querschnittsebene; und
- Fig. 3b: eine zweite Querschnittsansicht des Raytracing-Modells des Airy-Strahls in einer zweiten Querschnittsebene.

### Beispiele

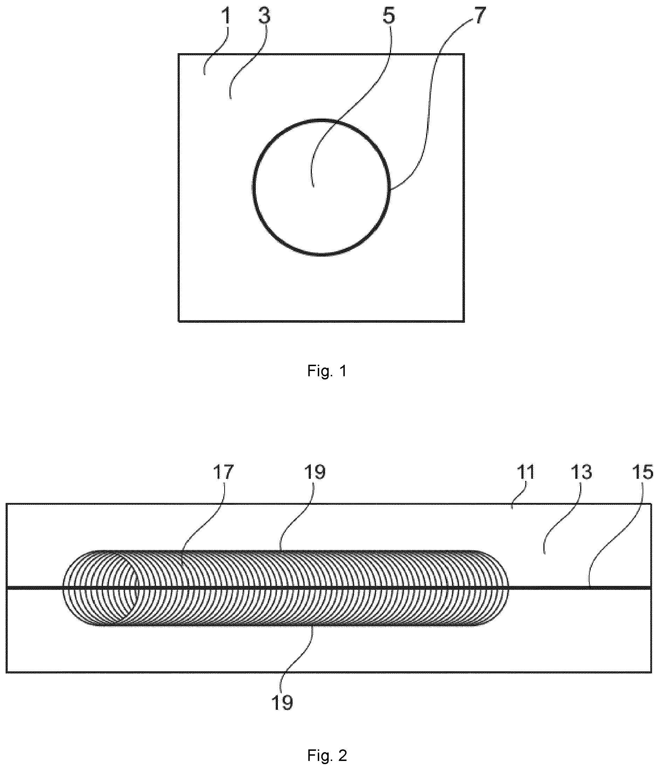

Figur 1 zeigt ein rechteckiges, scheibenförmiges Glaselement 1 in einer Aufsicht. Das Glaselement 1 umfasst einen Glaskörper 3, der ein Glasmaterial aufweist.

Indem innerhalb des Glaskörpers 3 ein Linienfokus, der senkrecht zur Oberfläche (die parallel zur Zeichenebene der Figur 1 verläuft) des Glaselements 1 verläuft, ausgebildet wurde, wurde das Glasmaterial im gesamten Tiefenbereich (der senkrecht zur Zeichenebene der Figur 1 verläuft) hinsichtlich dessen Spannungswerte modifiziert. Und zwar bildeten sich (in jeder Querschnittsebene parallel zur Zeichenebene der Figur 1 gleichermaßen) eine Zugspannungszone 5 und eine Druckspannungszone 7 aus, wobei die Zugspannungszone 7 von der Druckspannungszone 5 umgeben ist. Im Innern muss eine Zugspannungszone sein, die von einer Druckspannungszone umgeben ist. Denn bei (hier nicht betrachteten) höheren Pulsenergien wird ein (offener) Kanal erzeugt, dessen Wandungen durch das verdrängte Material unter Druck stehen. Erfindungsgemäß findet jedoch keine Verdrängung von Material statt,

Da der Linienfokus einen kreisförmigen Querschnitt hat, ist die Zugspannungszone 5 ebenfalls kreisförmig und die Druckspannungszone 7 ringförmig, konzentrisch und direkt an die Zugspannungszone 5 anschließend angeordnet.

In Bezug auf die Erfindung entspräche hier der (Volumen-) Bereich mit den Druck- und Zugspannungszonen 5, 7 im Glaskörper 3 einem erfindungsgemäßen Ortsbereich.

Figur 2 zeigt ein rechteckiges, scheibenförmiges, Glaselement 11 in einer Draufsicht. Das Glaselement 11 umfasst einen Glaskörper 13, der ein Glasmaterial aufweist.

Ein Linienfokus wurde derart innerhalb des Glaskörpers 13 gesteuert, dass entlang der (geplanten) Trennfläche, deren Verlauf senkrecht zur Zeichenebene der Figur 2 ist und die durch die Kante 15 angedeutet werden soll, zumindest eine Zugspannungszone 17 und zumindest zwei Druckspannungszonen 19 im Glasmaterial ausgebildet werden, wobei die Zugspannungszone 17 zumindest bereichsweise jeweils von zumindest einer der beiden Druckspannungszone 19 umgeben ist.

Das Steuern des Linienfokus umfasst dabei, dass der Linienfokus nacheinander innerhalb unterschiedlicher Ortsbereiche des Glasmaterials entlang der (geplanten) Trennfläche ausgebildet wird und dadurch das Glasmaterial jeweils dieser Ortsbereiche hinsichtlich dessen örtlicher Spannungswerte modifiziert wird. Das Glaselement 11 wird dazu relativ zu dem Linienfokus verfahren, wodurch der Linienfokus nacheinander innerhalb der unterschiedlichen Ortsbereichen ausgebildet werden kann. In jedem Ortsbereich erzeugt der Linienfokus dann ein Spannungsmuster wie in Bezug auf Figur 1 beschrieben wurde.

Dabei ist der Abstand der einzelnen Ortsbereiche derart gewählt, dass zumindest unmittelbar benachbarte Ortsbereiche zumindest teilweise überlappen, so dass ein durchgehender Korridor von eingebrachten Modifikationen im Glasmaterial entlang der (geplanten) Trennfläche ausgebildet wird. Konkret weisen hier jeweils zwei unmittelbar benachbarte Ortsbereiche einen Mitte-Mitte-Abstand auf, der kleiner ist als der größte Durchmesser der Ausdehnung der Ortsbereiche in der Querschnittsebene parallel zur Zeichenebene der Figur 2. Durch die Überlagerung der Modifikationen mehrerer Ortsbereiche werden letztlich entlang der (geplanten) Trennfläche die unterschiedlichen Spannungszonen ausgebildet. In der Zeichenebene der Figur 2 und in allen dazu parallelen Querschnittsebenen ist die Zugspannungszone 17 sandwichartig unmittelbar zwischen den beiden Druckspannungszonen 19 angeordnet.

Man erkennt in Figur 2 dabei auch gut den im Glaskörper 13 durchgehenden Korridor in Form der Spannungszonen 17 und 19.

Anschließend kann innerhalb der Zugspannungszone 17 eine Initialschädigung zum Ausbilden eines Risses eingebracht und dieser darin vorangetrieben werden, so dass das Glaselement 11 an der (geplanten) Trennfläche, mit einem Verlauf gemäß der Kante 15, in zwei Glasteilelemente getrennt werden kann.

Es ist dabei zu betonen, dass in Figur 2 zu Illustrationszwecken die Spannungszonen 17, 19 nicht über den gesamten Breitenbereich, d.h. nicht entlang der gesamten Kante 15, des Glaselements 11 ausgebildet dargestellt sind, was zum Trennen des Glaselements 11 freilich notwendig ist.

Grundsätzlich könnte der Linienfokus ein Linienfokus eines Laserstrahls darstellen, wobei der Laserstrahl in Form eines Airy-Strahls ausgebildet ist.

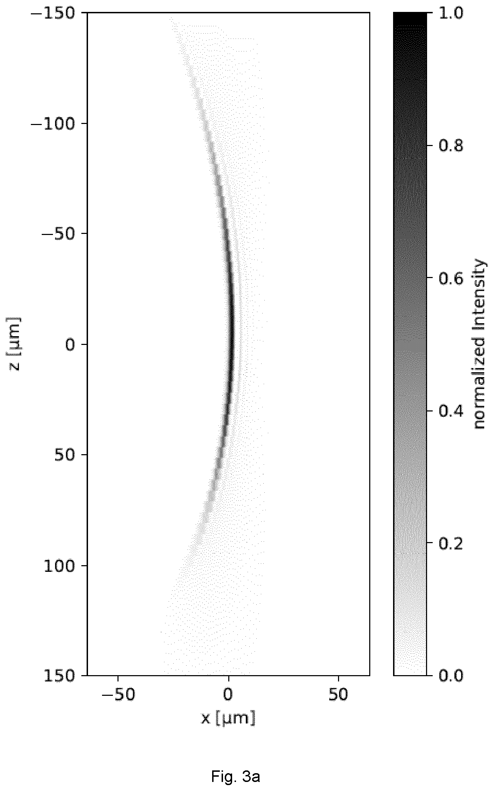

Figur 3a zeigt eine erste Querschnittsansicht eines Raytracing-Modells eines Airy-Strahls in einer ersten Querschnittsebene. Die erste Querschnittsebene verläuft dabei parallel zur Trennfläche eines hypothetischen (z.B. quaderförmigen) Glaselements. D.h., die Trennfläche liegt in der x-z-Ebene (bei y=0) und schneidet den kompletten, gekrümmten Linienfokus. Der Linienfokus hat in Figur 3a seine maximale Intensität in dessen Mitte, also im Bereich um den Punkt (x=0; z=0). Entsprechend des gekrümmten Linienfokus verlaufen auch die Ortsbereiche gleichermaßen gekrümmt. Bei dem erfindungsgemäßen Verfahren folgen vorliegend benachbarte Ortsbereiche in positiver x-Richtung aufeinander.

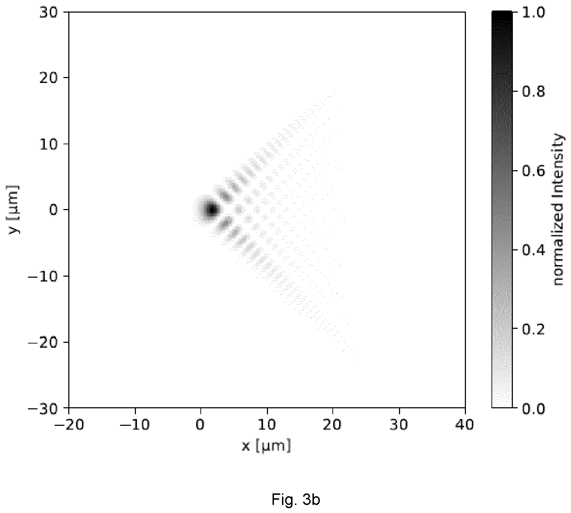

Figur 3b zeigt eine zweite Querschnittsansicht des Raytracing-Modells des Airy-Strahls in einer zweiten Querschnittsebene. Die zweite Querschnittsebene steht senkrecht auf der ersten Querschnittsebene. Beispielsweise könnte dies die Oberfläche des hypothetischen (quaderförmigen) Glaselements sein, oder eine dazu parallel verlaufende Ebene innerhalb des Glaselements. Bei dem erfindungsgemäßen Verfahren folgen vorliegend benachbarte Ortsbereiche in positiver x-Richtung aufeinander.

Die Querschnittsebene der Figur 3b schneidet den Linienfokus des Laserstrahls im Bereich um den Punkt (x=0; y=0). Im Bereich positiver x-Werte sind außerdem die lateralen Teilstrahlen des Laserstrahls zu sehen. Wie aus Figur 3b weiter ersichtlich ist, weist der Airy-Strahl dort keine lateralen Komponenten hin zu negativen x-Werten auf. Stattdessen erfolgt die Strahlzuführung entsprechend einer bevorzugten Ausführungsform des erfindungsgemäßen Verfahrens asymmetrisch, in der Situation der Figur 3b also nur aus Teilen des Halbraums mit positiven x-Werten. Dadurch treten bei einem relativen Verschieben des Linienfokus in Richtung der positiven x-Achse keine Teilstrahlen im Bereich vorheriger Modifikationen auf.

Wie bereits erwähnt, wird im Zusammenhang mit der Strahlzuführung bzw. Energiezuführung vorliegend der Begriff "asymmetrisch" im Sinne von "nicht-rotationssymmetrisch" verstanden. Das bedeutet, dass andere Symmetrien damit nicht ausgeschlossen werden. Zum Beispiel hat der nun beschriebene Airy-Strahl eine Spiegelebene parallel zur x-z-Ebene, wie aus Figur 3b ersichtlich ist.

Die in der vorangehenden Beschreibung, in den Ansprüchen und in den Zeichnungen offenbarten Merkmale können sowohl einzeln als auch in beliebiger Kombination wesentlich für die Erfindung in ihren verschiedenen Ausführungsformen sein.

### Bezugszeichenliste

- 1: Glaselement
- 3: Glaskörper
- 5: (Zug-) Spannungszone
- 7: (Druck-) Spannungszone
- 11: Glaselement
- 13: Glaskörper
- 15: (geplante) Kante
- 17: Spannungszone
- 19: Spannungszone

## Patentansprüche

1. Verfahren zum zumindest bereichsweisen Trennen eines Glaselements (1, 11) in wenigstens zwei Glasteilelemente entlang einer Trennfläche, umfassend die Schritte:
- Bereitstellen des Glaselements (1, 11), das zumindest einen zumindest ein Glasmaterial aufweisenden Glaskörper (3, 13) umfasst;
- Steuern zumindest eines Linienfokus innerhalb des Glaskörpers (3, 13) derart, dass entlang der Trennfläche zumindest eine Zugspannungszone (17) und/oder zumindest zwei Druckspannungszonen (19) im Glasmaterial ausgebildet werden;
- Einbringen einer Initialschädigung zum Ausbilden zumindest eines Risses, jeweils in das Glasmaterial in der Zugspannungszone (17) und/oder zwischen den zwei Druckspannungszonen (19); und
- Vorantreiben des Risses innerhalb des Glasmaterials in der Zugspannungszone (17) bzw. zwischen den zwei Druckspannungszonen (19) zum Ausbilden der Trennfläche und Trennen des Glaselements (1, 11) entlang dieser Trennfläche.

2. Verfahren nach Anspruch 1,
wobei
(i) die Druckspannungszonen zumindest bereichsweise zueinander beabstandet sind;
(ii) die Zugspannungszone (17) zumindest bereichsweise jeweils von zumindest einer Druckspannungszone (19) umgeben ist;
(iii) das Steuern des Linienfokus umfasst, dass entlang der Trennfläche zumindest eine Zugspannungszone (17) und zumindest zwei Druckspannungszonen (19) im Glasmaterial ausgebildet werden, wobei die Zugspannungszone (17) zumindest bereichsweise jeweils von zumindest einer der beiden Druckspannungszone (19) umgeben ist;
(iv) das Steuern des Linienfokus umfasst, dass das Glaselement (1, 11) relativ zu dem Linienfokus verfahren wird, wodurch vorzugsweise der Linienfokus, insbesondere nacheinander oder kontinuierlich, zumindest an den unterschiedlichen Ortsbereichen ausgebildet werden kann;
(v) das Steuern des Linienfokus zu einem zerstörungsfreien Ausbilden der Spannungszonen führt, Modifikationen vom Typ "soft refractive index change" in das Glasmaterial einbringt, und/oder umfasst, dass der Linienfokus nacheinander innerhalb unterschiedlicher Ortsbereiche des Glasmaterials entlang der Trennfläche ausgebildet wird und dadurch das Glasmaterial jeweils dieser Ortsbereiche hinsichtlich dessen örtlicher Spannungswerte modifiziert wird, und wobei der Abstand der einzelnen Ortsbereiche derart gewählt ist, dass zumindest unmittelbar benachbarte Ortsbereiche zumindest teilweise überlappen, so dass ein durchgehender Korridor von eingebrachten Modifikationen im Glasmaterial entlang der Trennfläche ausgebildet wird, wobei vorzugsweise durch die Überlagerung der Modifikationen mehrerer Ortsbereiche die unterschiedlichen Spannungszonen ausgebildet werden, und/oder wobei die einzelnen Ortsbereiche in zumindest einer, vorzugsweise parallel zu zumindest einer, insbesondere zumindest eine der Schnittkanten der Trennfläche umfassenden, Oberfläche des Glaskörpers (3, 13) und/oder senkrecht zur optischen Achse des Lichtstrahls verlaufenden, Querschnittsebene des Glaselements (1, 11) entlang eines geradlinigen Pfades verlaufen;
und/oder
(vi) in zumindest einer Querschnittsebene, vorzugsweise in allen Querschnittsebenen, parallel zu der Oberfläche des Glaskörpers (3, 13), die Ortsbereiche kreisförmig ausgebildet sind und/oder jeweils zwei unmittelbar benachbarte Ortsbereiche (a) einen Mitte-Mitte-Abstand oder einen Schwerpunkt-Schwerpunkt-Abstand aufweisen, der kleiner ist als der größte Durchmesser ihrer Ausdehnung, insbesondere die Ausdehnung in der Querschnittsebene, und/oder (b) einen Mitte-Mitte-Abstand oder einen Schwerpunkt-Schwerpunkt-Abstand von 1000 nm oder weniger, bevorzugter von 100 nm oder weniger, noch bevorzugter von 10 nm oder weniger und am bevorzugtesten von 1 nm oder weniger aufweisen.

3. Verfahren nach Anspruch 2,
wobei
i. der Linienfokus durch mindestens einen Lichtstrahl, insbesondere in Form eines Laserstrahls, ausgebildet wird, wobei vorzugsweise der zumindest eine Laserstrahl zumindest im Bereich des Linienfokus ein Airy-Strahlprofil und/oder ein Bessel-Strahlprofil aufweist;
ii. der Lichtstrahl zumindest im Bereich des Linienfokus in Form eines Lichtstrahls mit asymmetrischer Strahlzuführung ausgebildet ist, insbesondere die Energie asymmetrisch zugeführt wird, und vorzugsweise (a) derart ausgestaltet ist, dass der Schwerpunkt der Energieverteilung in wenigstens einer Ebene senkrecht zur Ebene, in der die Strahlausbreitung erfolgt, im Bereich des bisher nicht modifizierten Glasmaterials liegt, (b) die Teilstrahlen des Lichtstrahls nur aus einer halben Raumhälfte, oder einem Teil davon, einfallen, (c) die Teilstrahlen des Lichtstrahls nur aus Richtungen einfallen, die so gewählt sind, dass sie nicht durch Bereiche des Glaskörpers propagieren, in denen bereits Glasmaterial modifiziert wurde, (d) der Lichtstrahl zumindest eine Spiegelebene parallel zu der Ebene, in der die Strahlausbreitung erfolgt, aufweist, (e) der Begriff "asymmetrisch" im Sinne von "nicht-rotationssymmetrisch" zu verstehen ist, insbesondere also andere Symmetrien nicht ausgeschlossen sind und/oder (d) die Teilstrahlen des Lichtstrahls in jeder zu zumindest einer Oberfläche des Glaselements parallelen Ebene und/oder in jeder zur optischen Achse des Lichtstrahls senkrechten Ebene nur aus einem oder nur aus zwei Quadranten einfallen;
iii. der oder die Laserstrahlen mittels zumindest eines Lasers erzeugt werden und der Laser in einem Pulsbetrieb, insbesondere in einem Ultrakurzpulslaser-Betrieb, betrieben wird;
iv. der Laser eine Wellenlänge von zwischen 300 nm und 1200 nm, vorzugsweise 1064 nm, eine Pulsdauer von zwischen 0,1 ps und 100 ps, vorzugsweise zwischen 0,1 ps und 10 ps, vorzugsweise 1 ps oder 8 ps, und/oder, zumindest bereichsweise im Linienfokus, eine Pulsenergie von zwischen 10 nJ/mm und 200 µJ/mm, bevorzugt zwischen 10 nJ/mm und 100 µJ/mm oder 110 µJ/mm, für Punkfoki: 1 nJ bis 100 nJ und für Burst 1 nJ - 20 nJ, aufweist;
und/oder
v. der Linienfokus ganz oder teilweise mittels zumindest einer Phasenmaske, insbesondere aufweisend eine kubische Phase, mittels zumindest eines Mikroskop-Objektivs, mittels zumindest eines 4f-Aufbaus, mittels zumindest einer asymmetrischer Strahlzuführung und/oder mittels einer Vielzahl von Strahlformelementen, wie insbesondere zylindrischen Linsen, ausgebildet wird, insbesondere die Strahlformelemente derart gewählt und/oder angeordnet sind, dass sich der Linienfokus durch Koma, Astigmatismus und/oder sphärische Aberration ausbildet.

4. Verfahren nach einem der vorangehenden Ansprüche,
(i) wobei in der Zug- und/oder Druckspannungszone (17, 19) die Isobaren der ersten Hauptspannung parallel zur Trennfläche verlaufen;
(ii) wobei die beiden Druckspannungszonen (19) voneinander getrennt sind, insbesondere parallel beabstandet zueinander verlaufen;
und/oder
(iii) wobei in zumindest einer Querschnittsebene, vorzugsweise in allen Querschnittsebenen, parallel zu der Oberfläche des Glaskörpers (3, 13) zumindest bereichsweise, vorzugsweise überall,
i. die Zugspannungszone (17) sandwichartig, insbesondere unmittelbar, zwischen den beiden Druckspannungszonen (19) angeordnet ist;
und/oder
ii. die Zugspannungszone (17) eine erste Dicke aufweist und die Druckspannungszone (19) eine zweite Dicke aufweist, wobei vorzugsweise die erste bzw. zweite Dicke jeweils in der Querschnittsebene in einer Richtung senkrecht zur Haupterstreckungsrichtung der Trennfläche gemessen wird und/oder jeweils die maximale Dicke der Druck- bzw. Zugspannungszone (17, 19) in der jeweiligen Querschnittsebene ist, und wobei insbesondere die erste Dicke kleiner als 50 µm, vorzugsweise kleiner als 10 µm, noch bevorzugter kleiner als 5 µm, noch bevorzugter kleiner als 2 µm, noch bevorzugter kleiner als 1 µm und am bevorzugtesten zwischen 0,1 µm und 1 µm ist, und/oder die zweite Dicke kleiner als 100 µm ist und/oder größer als 1 nm ist, insbesondere zwischen 10 nm und 1 µm ist.

5. Verfahren nach einem der vorangehenden Ansprüche, wobei
i. die Initialschädigung mittels eines gepulsten Lasers, vorzugsweise aufweisend eine Pulsenergie von zwischen 80 µJ/mm und 300 µJ/mm und/oder eine Pulsdauer von zwischen 0,1 ps und 20 ps, in das Glasmaterial eingebracht wird;
ii. der Riss durch mechanisches Brechen, durch Cleaven und/oder durch mindestens einen Ultrakurzpulslaser (UKP)-Prozess vorangetrieben wird;
und/oder
iii. die Trennfläche innerhalb der Zugspannungszone (17) und/oder zwischen zwei Druckspannungszonen (19) verläuft und/oder sich ausbildet.

6. Verfahren nach einem der vorangehenden Ansprüche,
wobei die Ortsbereiche im Glasmaterial zumindest bereichsweise schlauch- und/oder zylinderförmig und/oder gekrümmt, insbesondere in zumindest einer Querschnittsebene sichelartig, verlaufen und/oder sich vorzugsweise von der Oberfläche des Glaskörpers (3, 13) zur der Oberfläche gegenüberliegenden Oberfläche des Glaskörpers (3, 13) durch den gesamten zwischen den beiden Oberflächen eingeschlossenen Dickenbereich des Glaskörpers (3, 13) hindurch erstrecken.

7. Verfahren nach einem der vorangehenden Ansprüche,
wobei das Glaselement (1, 11), insbesondere der Glaskörper (3, 13), zumindest bereichsweise und/oder komplett scheibenförmig ausgestaltet ist und/oder das Glasmaterial zumindest teilweise Silikatglas, wie Alumosilikatglas und/oder Borosilikatglas, umfasst.

8. Glasteilelement, insbesondere hergestellt und/oder herstellbar mit einem Verfahren gemäß einem der Ansprüche 1 bis 7,
umfassend zumindest einen zumindest ein Glasmaterial aufweisenden Glaskörper (3, 13), der zumindest eine Seitenfläche aufweist,
wobei die Spannungswerte des Glaskörpers (3, 13) in zumindest einer Ebene zumindest bereichsweise, vorzugsweise vollständig, einer Druckspannung, vorzugsweise von 1 MPa bis 3000 MPa, insbesondere von 50 MPa bis 700 MPa, entsprechen, wobei die Ebene vorzugsweise parallel zur Seitenfläche verläuft.

9. Glasteilelement nach Anspruch 8, wobei die Spannungswerte in der Seitenfläche des Glaskörpers (3, 13) zumindest bereichsweise einer Zugspannung entsprechen, die Ebene in einem Volumenbereich liegt, in der die Spannungswerte des Glaskörpers (3, 13) einer Druckspannung entsprechen und/oder in der Ebene die Isobaren der ersten Hauptspannung des Glaskörpers (3, 13) parallel zur Seitenfläche verlaufen.

10. Glasteilelement nach einem der Ansprüche 8 bis 9,
wobei entlang der Seitenfläche die Kantenfestigkeit des Glasteilelements, insbesondere des Glaskörpers (3, 13), größer als 100 MPa ist und/oder konstant über die gesamte Seitenfläche ist.

11. Glasteilelement nach einem der Ansprüche 8 bis 10,
wobei die Seitenfläche zumindest bereichsweise eine, vorzugsweise mittlere, Oberflächenrauheit mit einer Rautiefe RZ von 5 nm bis 10 µm, insbesondere von 0,1 µm - 5 µm, aufweist.

12. Glasteilelement nach einem der Ansprüche 8 bis 11,
wobei die Seitenfläche plan und/oder gewölbt ist, insbesondere, vorzugsweise in zumindest einer Querschnittsebene senkrecht zur Seitenfläche, zumindest abschnittsweise einen parabelförmigen und/oder kreisförmigen Verlauf und/oder einen Verlauf gemäß einer Gleichung vierten Grades aufweist.

## Claims

1. Method for separating a glass element (1, 11) at least section-wise into at least two partial glass elements along a separation surface, comprising the steps of:
providing the glass element (1, 11), which comprises at least one glass body (3, 13) comprising at least one glass material;
controlling at least one line focus within the glass body (3, 13) in such a way that at least one tensile stress zone (17) and/or at least two compressive stress zones (19) are formed in the glass material along the separation surface;
introducing an initial damage to form at least one crack respectively in the glass material in the tensile stress zone (17) and/or between the two compressive stress zones (19); and
advancing the crack within the glass material in the tensile stress zone (17) and/or between the two compressive stress zones (19) to form the separation surface and separating the glass element (1, 11) along this separation surface.

2. Method according to claim 1, wherein:
(i) the compressive stress zones are spaced apart from one another at least section-wise;
(ii) the tensile stress zone (17) is at least section-wise surrounded by at least one compressive stress zone (19);
(iii) controlling the line focus comprises forming along the separation surface at least one tensile stress zone (17) and at least two compressive stress zones (19) in the glass material, wherein the tensile stress zone (17) is at least section-wise surrounded by at least one of the two compressive stress zones (19);
(iv) controlling the line focus comprises moving the glass element (1, 11) relative to the line focus, whereby preferably the line focus can be formed, in particular successively or continuously, at least at different local regions;
(v) controlling the line focus leads to a non-destructive formation of the stress zones, introduces modifications of the type "soft refractive index change" into the glass material, and/or comprises that the line focus is formed successively within different local regions of the glass material along the separation surface and thereby the glass material of each of these local regions is modified with respect to its local stress values, and wherein the spacing of the individual local regions is selected such that at least immediately adjacent local regions at least partially overlap, so that a continuous corridor of introduced modifications is formed in the glass material along the separation surface, wherein the different stress zones are preferably formed by superimposing the modifications of a plurality of local regions, and/or wherein the individual local regions extend in at least one cross-sectional plane of the glass element (1, 11) extending preferably parallel to at least one surface of the glass body (3, 13) which in particular comprises at least one of the cut edges of the separating surface, and/or perpendicular to the optical axis of the light beam along a rectilinear path; and/or
(vi) in at least one cross-sectional plane, preferably in all cross-sectional planes, parallel to the surface of the glass body (3, 13), the local regions are formed circular and/or two directly adjacent respective local regions (a) have a center-to-center distance or a centroid-to-centroid distance, which is smaller than the largest diameter of their extension, in particular the extension in the cross-sectional plane, and/or (b) have a center-to-center distance or a centroid-to-centroid distance of 1000 nm or less, more preferably of 100 nm or less, even more preferably of 10 nm or less and most preferably of 1 nm or less.

3. Method according to claim 2, wherein
i. the line focus is formed by at least one light beam, in particular in the form of a laser beam, wherein preferably the at least one laser beam comprises an Airy beam profile and/or a Bessel beam profile at least in the region of the line focus;
ii. the light beam is formed at least in the region of the line focus in the form of a light beam with asymmetric beam delivery, in particular the energy is delivered asymmetrically, and preferably (a) is designed in such a way that the centroid of the energy distribution in at least one plane perpendicular to the plane in which the beam propagation takes place lies in the region of the yet unmodified glass material, (b) the partial rays of the light beam are incident only from one half of the space, or a part thereof, (c) the partial rays of the light beam are incident only from directions which are selected such that they do not propagate through regions of the glass body in which glass material has already been modified, (d) the light beam has at least one mirror plane parallel to the plane in which the beam propagation takes place, (e) the term "asymmetrical" is to be understood in the sense of "non-rotationally symmetrical", i.e. in particular other symmetries are not excluded and/or (f) the partial beams of the light beam are incident from only one or only two quadrants in each plane parallel to at least one surface of the glass element and/or in each plane perpendicular to the optical axis of the light beam;
iii. the laser beam or beams are generated by means of at least one laser and the laser is operated in a pulsed mode, in particular in an ultrashort pulse laser mode;
iv. the laser has a wavelength of between 300 nm and 1200 nm, preferably 1064 nm, a pulse duration of between 0.1 ps and 100 ps, preferably between 0.1 ps and 10 ps, preferably 1 ps or 8 ps, and/or, at least section-wise in the line focus, a pulse energy of between 10 nJ/mm and 200 µJ/mm, preferably between 10 nJ/mm and 100 µJ/mm or 110 µJ/mm, for point foci: 1 nJ to 100 nJ and for burst 1 nJ - 20 nJ;
and/or
v. the line focus is formed completely or partially by means of at least one phase mask, in particular comprising a cubic phase, by means of at least one microscope objective, by means of at least one 4f structure, by means of at least one asymmetric beam delivery and/or by means of a plurality of beam shaping elements, such as in particular cylindrical lenses, in particular the beam shaping elements are selected and/or arranged in such a way that the line focus is formed by coma, astigmatism and/or spherical aberration.

4. Method according to any one of the preceding claims,
(i) wherein in the tensile and/or compressive stress zone (17, 19) the isobars of the first principal stress extend parallel to the separation surface,
(ii) wherein the two compressive stress zones (19) are separated from each other, in particular extend parallel to each other at a distance;
and/or
(iii) wherein in at least one cross-sectional plane, preferably in all cross-sectional planes, parallel to the surface of the glass body (3, 13) at least section-wise, preferably everywhere
i. the tensile stress zone (17) is arranged sandwich-like, in particular directly, between the two compressive stress zones (19);
and/or
ii. the tensile stress zone (17) has a first thickness and the compressive stress zone (19) has a second thickness, wherein preferably the first and the second thickness are each measured in the cross-sectional plane in a direction perpendicular to the main direction of extension of the separation surface and/or is respectively the maximum thickness of the compressive and the tensile stress zone (17, 19) in the respective cross-sectional plane, and wherein in particular the first thickness is less than 50 µm, preferably less than 10 µm, more preferably less than 5 µm, even more preferably less than 2 µm, even more preferably less than 1 µm and most preferably between 0.1 µm and 1 µm, and/or the second thickness is less than 100 µm and/or greater than 1 nm, in particular between 10 nm and 1 µm.

5. Method according to any one of the preceding claims, wherein
i. the initial damage is introduced into the glass material by means of a pulsed laser, preferably having a pulse energy of between 80 µJ/mm and 300 µJ/mm and/or a pulse duration of between 0.1 ps and 20 ps,
ii. the crack is propagated by mechanical breaking, by cleaving and/or by at least one ultrashort pulse laser (USP) process,
and/or
the separation surface extends and/or is formed within the tensile stress zone (17) and/or between two compressive stress zones (19).

6. Method according to any one of the preceding claims,
wherein the local regions in the glass material extend at least section-wise in a tubular and/or cylindrical and/or curved manner, in particular in a sickle-like manner in at least one cross-sectional plane, and/or preferably extend from the surface of the glass body (3, 13) to the surface of the glass body (3, 13) opposite the surface through the entire thickness region of the glass body (3, 13) enclosed between the two surfaces.

7. Method according to any one of the preceding claims,
wherein the glass element (1, 11), in particular the glass body (3, 13), is formed at least section-wise and/or completely disk-shaped and/or the glass material comprises at least partially silicate glass, such as aluminosilicate glass and/or borosilicate glass.

8. Glass part element, in particular produced and/or producible by a method according to any one of claims 1 to 7,
comprising at least one glass body (3, 13) comprising at least one glass material and comprising at least one lateral surface,
wherein the stress values of the glass body (3, 13) in at least one plane correspond at least section-wise, preferably completely, to a compressive stress, preferably from 1 MPa to 3000 MPa, in particular from 50 MPa to 700 MPa, wherein the plane preferably extends parallel to the lateral surface.

9. Glass part element according to claim 8, wherein the stress values in the lateral surface of the glass body (3, 13) correspond at least section-wise to a tensile stress, the plane lies in a volume region in which the stress values of the glass body (3, 13) correspond to a compressive stress and/or in the plane the isobars of the first principal stress of the glass body (3, 13) extend parallel to the lateral surface.

10. Glass part element according to claim 8 or 9,
wherein along the lateral surface the edge strength of the glass part element, in particular of the glass body (3, 13), is greater than 100 MPa and/or is constant over the entire lateral surface.

11. Glass part element according to any one of claims 8 to 10,
wherein the lateral surface comprises at least section-wise a, preferably average, surface roughness with a roughness depth RZ of 5 nm to 10 µm, in particular of 0.1 µm to 5 µm.

12. Glass part element according to any one of claims 8 to 11,
wherein the lateral surface is flat and/or curved, in particular, preferably in at least one cross-sectional plane perpendicular to the lateral surface, at least section-wise has a parabolic and/or circular shape and/or a shape according to a fourth degree equation.

## Revendications

1. Procédé de séparation, au moins par zones, d'un élément en verre (1, 11) en au moins deux parties d'élément en verre le long d'une surface de séparation, comprenant les étapes suivantes :
- fournir l'élément en verre (1, 11) qui comprend au moins un corps en verre (3, 13) comportant au moins une matière vitreuse ;
- commander au moins un foyer linéaire à l'intérieur du corps en verre (3, 13) de façon à former au moins une zone de contrainte en traction (17) et/ou au moins deux zones de contrainte en compression (19) dans la matière vitreuse le long de la surface de séparation ;
- introduire une amorce d'endommagement afin de former au moins une fissure, à chaque fois dans la matière vitreuse dans la zone de contrainte en traction (17) et/ou entre les deux zones de contrainte en compression (19) ; et
- faire avancer la fissure à l'intérieur de la matière vitreuse dans la zone de contrainte de en traction (17) ou entre les deux zones de contrainte en compression (19) afin de former la surface de séparation et de séparer l'élément en verre (1, 11) le long de cette surface de séparation.

2. Procédé selon la revendication 1, dans lequel
(i) les zones de contrainte en compression sont espacées les unes des autres au moins par zones ;
(ii) la zone de contrainte en traction (17) est entourée au moins par zones respectivement, par au moins une zone de contrainte en compression (19) ;
(iii) la commande du foyer linéaire comprend la formation d'au moins une zone de contrainte en traction (17) et d'au moins deux zones de contrainte en compression (19) dans la matière vitreuse le long de la surface de séparation, la zone de contrainte en traction (17) étant entourée au moins par zones respectivement par au moins une des deux zones de contrainte en compression (19);
(iv) la commande du foyer linéaire comprend le déplacement de l'élément en verre (1, 11) par rapport au foyer linéaire, le foyer linéaire pouvant de préférence être formé, en particulier successivement ou en continu, au moins dans les différentes zones locales ;
(v) la commande du foyer linéaire conduit à une formation non destructive des zones de contraintes, introduisant des modifications de type « soft refractive index change » dans la matière vitreuse, et/ou comprend la formation du foyer linéaire successivement dans différentes zones locales de la matière vitreuse le long de la surface de séparation et ainsi la modification de la matière vitreuse de chacune de ces zones locales en termes de valeurs de contrainte locales de ladite matière vitreuse, et la distance entre les zones locales individuelles étant choisie de telle sorte qu'au moins des zones locales immédiatement adjacentes se chevauchent au moins partiellement de façon à former un couloir continu de modifications introduites dans la matière vitreuse le long de la surface de séparation, les différentes zones de contraintes étant formées de préférence par superposition des modifications de plusieurs zones locales, et/ou les zones locales individuelles s'étendant dans au moins un plan de coupe transversale de l'élément en verre (1, 11) qui s'étend de préférence parallèlement à au moins une surface du corps en verre (3, 13), comprenant en particulier au moins un des bords de coupe de la surface de séparation, et/ou perpendiculairement à l'axe optique du faisceau lumineux le long d'un trajet rectiligne ;
et/ou
(vi) dans au moins un plan de coupe transversale, de préférence dans tous les plans en coupe transversale, parallèlement à la surface du corps en verre (3, 13), les zones locales sont en forme de cercles et/ou deux zones locales immédiatement adjacentes présentent (a) une distance de centre à centre ou une distance entre centres de gravité qui est inférieure au plus grand diamètre de leur étendue, en particulier l'étendue dans le plan de coupe transversale, et/ou (b) une distance centre à centre ou une distance entre centres de gravité de 1000 nm ou moins, plus préférablement de 100 nm ou moins, encore plus préférablement de 10 nm ou moins, et le plus préférablement de 1 nm ou moins.

3. Procédé selon la revendication 2, dans lequel
i. le foyer linéaire est formé par au moins un faisceau lumineux, notamment sous la forme d'un faisceau laser, l'au moins un faisceau laser présentant de préférence un profil de faisceau Airy et/ou un profil de faisceau Bessel au moins dans la zone du foyer linéaire ;
ii. le faisceau lumineux est conçu au moins dans la zone du foyer linéaire sous la forme d'un faisceau lumineux à alimentation asymétrique, en particulier l'énergie est fournie de manière asymétrique, et de préférence (a) est conçu de telle sorte que le centre de gravité de la répartition d'énergie se situe dans au moins un plan, perpendiculaire au plan dans lequel le faisceau se propage, dans la zone de la matière vitreuse auparavant non modifiée, (b) les faisceaux partiels du faisceau lumineux ne sont incidents que depuis la moitié de l'espace, ou une partie de celle-ci, (c) les faisceaux partiels du faisceau lumineux ne sont incident que depuis des directions qui sont choisies de manière à ne pas se propager à travers des zones du corps en verre dans lesquelles la matière vitreuse a déjà été modifiée, (d) le faisceau de lumière comporte au moins un plan miroir parallèle au plan dans lequel le faisceau se propage, (e) le terme « asymétrique » doit être compris au sens de « non à symétrie de rotation », en particulier d'autres symétries ne sont donc pas exclues et/ou (d) les faisceaux partiels du faisceau lumineux dans chaque plan parallèle à au moins une surface de l'élément en verre et/ou dans chaque plan perpendiculaire à l'axe optique du faisceau lumineux ne sont incidents que depuis un quadrant ou que depuis deux quadrants ;
iii. le ou les faisceaux laser sont générés au moyen d'au moins un laser et le laser fonctionne en mode impulsionnel, en particulier en mode laser à impulsions ultra-courtes ;
iv. le laser a une longueur d'onde comprise entre 300 nm et 1200 nm, de préférence de 1064 nm, une durée d'impulsion comprise entre 0,1 ps et 100 ps, de préférence entre 0,1 ps et 10 ps, de préférence de 1 ps ou 8 ps, et/ou, au moins par zones dans le foyer linéaire, une énergie d'impulsion comprise entre 10 nJ/mm et 200 µJ/mm, de préférence entre 10 nJ/mm et 100 µJ/mm ou 110 µJ/mm, pour les foyers ponctuels : 1 nJ à 100 nJ et pour une rafale de 1 nJ à 20 nJ ;
et/ou
v. le foyer linéaire est formé entièrement ou partiellement au moyen d'au moins un masque de phase, présentant notamment une phase cubique, au moyen d'au moins un objectif de microscope, au moyen d'au moins une structure 4f, au moyen d'au moins une alimentation de faisceau asymétrique et/ou au moyen d'une pluralité d'éléments de mise en forme du faisceau, tels que notamment des lentilles cylindriques, en particulier les éléments de mise en forme de faisceau sont sélectionnés et/ou disposés de telle sorte que le foyer linéaire soit formé par la coma, l'astigmatisme et/ou l'aberration sphérique.

4. Procédé selon l'une des revendications précédentes,
(i) dans lequel dans la zone de contrainte en traction et/ou en compression (17, 19) les isobares de la première contrainte principale s'étendent parallèlement à la surface de séparation ;
(ii) dans lequel les deux zones de contrainte en compression (19) sont séparées l'une de l'autre, et s'étendent en particulier parallèles et espacées l'une de l'autre ; et/ou
(iii) dans lequel, dans au moins un plan de coupe transversale, de préférence dans tous les plans en coupe transversale, parallèle à la surface du corps en verre (3, 13), au moins par zones, de préférence partout,
i. la zone de contrainte en traction (17) est disposée en sandwich, en particulier directement, entre les deux zones de contrainte en compression (19) ;
et/ou
ii. la zone de contrainte en traction (17) a une première épaisseur et la zone de contrainte en compression (19) a une deuxième épaisseur, de préférence la première resp. la deuxième épaisseur étant mesurée respectivement dans le plan de coupe transversale dans une direction perpendiculaire à la direction d'extension principale de la surface de séparation et/ou respectivement l'épaisseur maximale de la zone de contrainte en compression ou en traction (17, 19) étant dans le plan de coupe transversale, et dans lequel en particulier la première épaisseur est inférieure à 50 µm, de préférence inférieure à 10 µm, encore plus préférablement inférieure à 5 µm, encore plus préférablement inférieure à 2 µm, encore plus préférablement inférieure à 1 µm et le plus préférablement entre 0,1 µm et 1 µm, et/ou la deuxième épaisseur est inférieure à 100 µm et/ou supérieure à 1 nm , notamment comprise entre 10 nm et 1 µm .

5. Procédé selon l'une des revendications précédentes, dans lequel
i. l'amorce d'endommagement est introduit dans la matière vitreuse au moyen d'un laser pulsé, de préférence ayant une énergie d'impulsion comprise entre 80 µJ/mm et 300 µJ/mm et/ou une durée d'impulsion comprise entre 0,1 ps et 20 ps ;
ii. la fissure avance par fracturation mécanique, par clivage et/ou par au moins un procédé laser à impulsions ultra-courtes (UKP) ;
et/ou
iii. la surface de séparation s'étend et/ou se forme à l'intérieur de la zone de contrainte en traction (17) et/ou entre deux zones de contrainte en compression (19).

6. Procédé selon l'une des revendications précédentes,
dans lequel les zones locales dans le matière vitreuse sont au moins par zones tubulaires et/ou cylindriques et/ou incurvées, en particulier falciformes dans au moins un plan de coupe transversale, et/ou s'étendent de préférence depuis la surface du corps en verre (3, 13) jusqu'à la surface opposée du corps en verre (3) sur toute la zone d'épaisseur du corps en verre (3, 13) entre les deux surfaces.

7. Procédé selon l'une des revendications précédentes,
dans lequel l'élément en verre (1, 11), en particulier le corps en verre (3, 13), est au moins par zones et/ou entièrement en forme de disque et/ou la matière vitreuse comprend au moins partiellement du verre silicaté, tel que du verre aluminosilicaté et/ou verre borosilicaté.

8. Partie d'élément en verre, en particulier réalisée et/ou pouvant être réalisée à l'aide d'un procédé selon l'une des revendications 1 à 7,
comprenant au moins un corps en verre (3, 13) comportant au moins une matière vitreuse et comportant au moins une surface latérale,
dans laquelle les valeurs de contrainte du corps en verre (3, 13) dans au moins un plan correspondant au moins par zones, de préférence complètement, à une contrainte en compression, de préférence de 1 MPa à 3000 MPa , en particulier de 50 MPa à 700 MPa, le plan étant de préférence parallèle à la surface latérale.

9. Partie d'élément en verre selon la revendication 8, dans laquelle les valeurs de contrainte dans la surface latérale du corps en verre (3, 13) correspondent au moins par zones à une contrainte en traction, le plan étant situé dans une zone de volume dans laquelle les valeurs de contrainte du corps en verre (3, 13) correspondent à une contrainte en compression et/ou dans le plan les isobares de la première contrainte principale du corps en verre (3, 13) s'étendant parallèlement à la surface latérale.

10. Partie d'élément en verre selon l'une des revendications 8 à 9,
dans laquelle le long de la surface latérale, la résistance des bords de la partie d'élément en verre, en particulier du corps en verre (3, 13), est supérieure à 100 MPa et/ou étant constante sur toute la surface latérale.

11. Partie d'élément en verre selon l'une des revendications 8 à 10,
dans laquelle la surface latérale présente au moins par zones une rugosité de surface, de préférence moyenne, avec une profondeur de rugosité RZ de 5 nm à 10 µm, en particulier de 0,1 µm à 5 µm.

12. Partie d'élément en verre selon l'une des revendications 8 à 11,
dans laquelle la surface latérale est plane et/ou incurvée, en particulier, de préférence dans au moins un plan de coupe perpendiculaire à la surface latérale, a au moins par portions une allure parabolique et/ou circulaire et/ou une allure selon une équation du quatrième degré.
